(19) **Europäisches Patentamt / European Patent Office / Office européen des brevets**

(11) **EP 1 752 073 B1**

(12) **EUROPÄISCHE PATENTSCHRIFT**

(45) Veröffentlichungstag und Bekanntmachung des Hinweises auf die Patenterteilung:
**31.12.2008 Patentblatt 2009/01**

(51) Int Cl.:
*H05B 6/06* (2006.01)    *A47J 39/00* (2006.01)
*H05B 6/12* (2006.01)

(21) Anmeldenummer: **06118752.2**

(22) Anmeldetag: **10.08.2006**

(54) **Vorrichtung und Verfahren zum induktiven Erwärmen von mehreren mit einer leitfähigen Schicht versehenen Geschirrelementen zur Aufnahme von Speisen**

Device and procedure for inductive warming of several table-ware elements provided with a conductive layer

Dispositif et procédure de chauffage inductif de plusieurs éléments de vaisselle équipés d'une couche conductrice

(84) Benannte Vertragsstaaten:
**AT CH DE ES LI**

(30) Priorität: **12.08.2005 DE 202005012767 U**

(43) Veröffentlichungstag der Anmeldung:
**14.02.2007 Patentblatt 2007/07**

(73) Patentinhaber: **Schmalz Distributions-Systeme AG**
**2560 Nidau (CH)**

(72) Erfinder: **Moser, Markus**
**2540 Grenchen (CH)**

(74) Vertreter: **Scheuzger, Beat Otto**
**Bovard AG**
**Patentanwälte VSP**
**Optingenstrasse 16**
**3000 Bern 25 (CH)**

(56) Entgegenhaltungen:
**EP-A1- 0 285 552        EP-A1- 0 591 760**
**EP-A1- 0 757 509        DE-A1- 10 133 180**
**DE-A1- 19 818 831**

EP 1 752 073 B1

**Beschreibung**

Technisches Gebiet

Die vorliegende Erfindung betrifft eine Vorrichtung und ein Verfahren zum induktiven Erwärmen von mehreren mit einer leitfähigen Schicht versehenen Geschirrelementen zur Aufnahme von Speisen, welche Geschirrelemente auf Unterlagen in einem kastenförmigen Aufbau angeordnet sind und eine Unterlage mindestens eine Induktionsspule aufweist, wobei mittels mindestens eines Generators ein Strom in die Induktionsspulen der Unterlagen zuführbar oder kontinuierlich regelbar ist und der in die Induktionsspulen zuführbare Strom ein- und ausschaltbar ist.

Stand der Technik

Im Stand der Technik sind Vorrichtungen zum induktiven Erwärmen von mit einer leitfähigen Schicht versehenen Geschirrelementen zur Aufnahme von Speisen bekannt. So sind beispielsweise in einem kastenförmigen Aufbau, wie z.B. einem Metallkasten mit einer Kastentür, in regelmässigen Abständen Unterlagen zur Aufnahme von Geschirrelementen angeordnet. Die Geschirrelemente dienen zur Aufnahme von Speisen und sind mit einer leitfähigen Schicht versehen. An den Unterlagen sind Induktionsspulen angebracht welche mittels eines Generators von einem Strom durchfliessbar sind. Durch eine elektromagnetische Wirkung zwischen den Induktionsspulen und der leitfähigen Schicht der Geschirrelemente kommt es zu einer Übertragung von Energie zwischen den Induktionsspulen und den leitfähigen Schichten der Geschirrelemente und somit zu einer Erwärmung der Geschirrelemente sowie der in den Geschirrelementen angeordneten Speisen. Solche Vorrichtungen zur Erwärmung von Speisen sind besonders vorteilhaft in Spitälern oder Altersheimen, wobei der kastenförmige Aufbau bevorzugt mit Rädern ausgerüstet ist, d.h. als kastenförmiger Wagen ausgeführt ist. So können beispielsweise in einer Grossküche Speisen zubereitet werden, die Speisen können anschliessend in Geschirrelemente verteilt werden und die Geschirrelemente können schliesslich auf Unterlagen eines kastenförmigen Wagens angeordnet werden. Die kastenförmigen Wagen werden anschliessend von der Grossküche auf Stockwerken von beispielsweise Spitälern oder Alterheimen verteilt. Zwischen der Zubereitung der Speisen und dem Servieren der Speisen vergeht jedoch oft soviel Zeit, dass es zu einer Abkühlung der Speisen kommt. In einer Ausführungsvariante ist der kastenförmige Wagen mit einer Kühleinheit ausgerüstet, sodass eine Abkühlung der Speisen forcierbar ist und die Speisen somit während einer bestimmbaren Zeitspanne, beispielsweise während einem Tag, frisch bleiben. Mittels der beschriebenen Induktionsspulen und der Beschichtung der Geschirrelemente lassen sich die Speisen vor dem Servieren auf eine erwünschte Temperatur erwärmen. Die Erwärmung erfolgt beispielsweise während einer bestimmbaren Anzahl periodisch wiederholten Intervallen, wobei in einem Intervall während einer Einschaltdauer mittels des Generators ein Strom in die Induktionsspulen zugeführt wird und in diesem Intervall während einer Ausschaltdauer den Induktionsspulen kein Strom zugeführt wird. Mit einem solchen Vorgehen lassen sich Speisen vor dem Servieren auf eine gewünschte Temperatur erwärmen ohne dass es zu einem Anbrennen der Speisen kommt. Je nach Bedarf kann ein kastenförmiger Wagen mit mehr oder weniger Geschirrelementen gefüllt sein. Die Erwärmung der Speisen ist jedoch für den Fall eines vollständig gefüllten kastenförmigen Wagens kalibriert. Wird ein kastenförmiger Wagen nur teilweise mit Geschirrelementen gefüllt, beispielsweise nur zu einem Viertel, dann führt dies zu einem veränderten elektromagnetischen Verhalten der Vorrichtung, welches insbesondere zu einer übermässigen Erwärmung der Speisen führt. Im Stand der Technik ist es bekannt, in den zu erwärmenden Speisen einen Kerntemperaturfühler anzubringen und die Erwärmung entsprechend einer mit diesem Kerntemperaturfühler gemessenen Temperatur zu regeln. Es ist im Stand der Technik jedoch keine Vorrichtung bekannt, mit welcher eine solche übermässige Erwärmung ohne die Verwendung eines Kerntemperaturfühlers verhindert werden kann.

Offenbarung der Erfindung

Es ist eine Aufgabe der vorliegenden Erfindung, eine neue Vorrichtung zum induktiven Erwärmen von mehreren mit einer leitfähigen Schicht versehenen Geschirrelementen zur Aufnahme von Speisen vorzuschlagen, welche nicht die Nachteile des Standes der Technik aufweist. Die neue Vorrichtung zum induktiven Erwärmen von Speisen soll insbesondere bewirken, dass Speisen ohne Kerntemperaturfühler unabhängig von der Anzahl Geschirrelemente auf eine gewünschte Temperatur erwärmbar sind.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass Kalibrierwerte, welche einen zuführbaren Strom einer Temperatur der Speisen zuordnen, in einem Rechenmodul abgespeichert werden, dass mittels eines Messmoduls die Stromstärke des in die Induktionsspulen zuführbaren Stroms messbar ist, dass mittels eines Rechenmoduls basierend auf den abgespeicherten Kalibrierwerten sowie basierend auf der gemessenen Stromstärke des in die Induktionsspulen zuführbaren Stroms eine Einschaltdauer oder ein Leistungskorrekturfaktor bestimmbar ist, und dass mittels eines Schaltmoduls oder Steuermoduls der mittlere in die Induktionsspulen zuführbare Strom entsprechend der mittels des Rechenmoduls bestimmten Einschaltdauer einschaltbar oder entsprechend des bestimmten Leistungskorrekturfaktors einstellbar ist. Eine solche Vorrichtung hat insbesondere den Vorteil, dass Geschirrelemente, unabhängig von der in der kastenförmigen Vorrichtung angeordneten Anzahl Geschirrelemente, automatisiert auf eine bestimmbare Temperatur erwärmbar sind.

In einer Ausführungsvariante werden die Induktionsspulen elektrisch seriell und/oder elektrisch parallel verschaltet. Eine solche Ausführungsvariante hat den Vorteil, dass die Verschaltung der Induktionsspulen an Ausführungsformen des kastenförmigen Aufbaus anpassbar ist.

In einer weiteren Ausführungsvariante ist der in die Induktionsspulen zuführbare Strom während einer Einschaltdauer einschaltbar und danach während einer Ausschaltdauer ausschaltbar, wobei das Einschalten und anschliessende Ausschalten des Stroms ein Intervall bildet, und wobei die Geschirrelemente mittels der Durchführung einer bestimmbaren Anzahl von Intervallen erwärmbar sind. Eine solche Ausführungsvariante hat insbesondere den Vorteil, dass eine Erwärmung der Speisen ohne eine Überhitzung der Speisen durchführbar ist und dass die Erwärmung der Speisen weiterhin unabhängig von der in der kastenförmigen Vorrichtung angeordneten Anzahl Geschirrelemente durchführbar ist.

In einer weiteren Ausführungsvariante ist die Einschaltdauer eines Intervalls mittels eines Reduktionsfaktors, welcher von der gemessenen Stromstärke des in die Induktionsspulen zuführbaren Stroms abhängig ist, reduzierbar. Eine solche Ausführungsvariante hat insbesondere den Vorteil, dass ein für eine bestimmbare Stromstärke geeigneter Reduktionsfaktor durch TemperaturMessungen bei verschiedenen Füllgraden kalibrierbar ist.

Der Korrekturfaktor ist eine stückweise linear interpolierte Funktion der gemessenen Stromstärke. Die Stützwerte für die Interpolation werden aus Temperatur- und Strommessungen bei verschiedenen Füllgraden berechnet.

In einer weiteren Ausführungsvariante ist der Korrekturfaktor eine Interpolation höherer Ordnung der gemessenen Stromstärke. Die Stützwerte für die Interpolation werden ebenfalls aus den Temperatur- und Strommessungen berechnet. Eine solche Ausführungsvariante hat insbesondere den Vorteil, dass unabhängig von der Anzahl der angeordneten Geschirrelemente die Speisen immer sehr genau auf eine bestimmbare Temperatur erwärmbar sind.

In einer anderen Ausführungsvariante ist bei der Anordnung einer maximalen Anzahl Geschirrelemente max eine maximale Stromstärke $I_{max}$ in die Induktionsspulen zuführbar, wobei eine Endtemperatur $T_{max}$ resultiert, wobei bei der Anordnung einer mittleren Anzahl Geschirrelemente x eine mittlere Stromstärke $I_x$ in die Induktionsspulen zuführbar ist, wobei eine Endtemperatur $T_x$ resultiert, wobei bei der Anordnung einer minimalen Anzahl Geschirrelemente *min* eine minimale Stromstärke $I_{min}$ in die Induktionsspulen (20..22) zuführbar ist, wobei eine Endtemperatur $T_{min}$ resultiert, und wobei daraus der Reduktionsfaktor *k* zur Reduktion der Einschaltdauer eines Intervalls mittels einer linearen Interpolation aus folgenden Stützpunkten und den Steigungen $m_1$ und $m_2$ bestimmbar ist:

$$k_{min} = \frac{(T_{max} - T_U)}{(T_{min} - T_U)}$$

$$k_x = \frac{(T_{m,ax} - T_U)}{(T_x - T_U)}$$

$$k_{max} = 1$$

$$m_2 = \frac{(k_{max} - k_x)}{(I_{max} - I_x)}$$

$$m_1 = \frac{(k_x - k_{min})}{(I_x - I_{min})}$$

$$k_1 = k_{min} - m_1(I_{min} - I)$$

$$k_2 = 1 - m_2(I_{max} - I)$$

$$k = Min\{k_1, k_2\} \quad wenn \quad m_1 > m_2$$

$$k = Max\{k_1, k_2\} \quad wenn \quad m_1 < m_2$$

Kurze Beschreibung der Zeichnung

Nachfolgend werden Ausführungsvarianten der vorliegenden Erfindung anhand von Beispielen beschrieben. Die Beispiele der Ausführungen werden durch folgende beigelegte Figur illustriert:

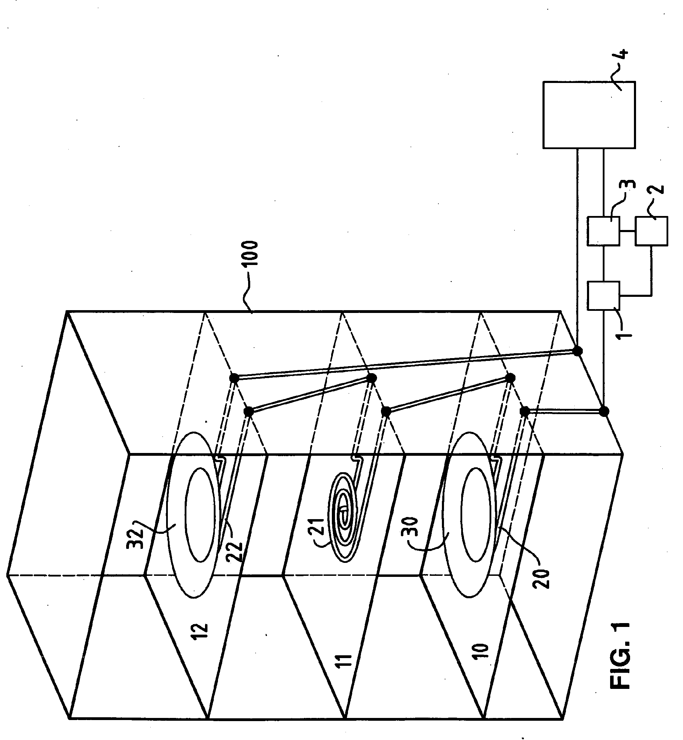

Figur 1 zeigt schematisch ein Blockdiagramm einer erfindungsgemässen Vorrichtung.

Ausführungsform(en) der Erfindung

In Figur 1 bezieht sich das Bezugszeichen 100 auf einen kastenförmigen Aufbau, beispielsweise auf einen Metallkasten mit einer Metalltür. Die Bezugszeichen 10...12 beziehen sich auf Unterlagen welche beispielsweise in regelmässigen Abständen in der vertikalen Richtung des kastenförmigen Aufbaus verteilt sind und mittels Befestigungsmittel mit dem kastenförmigen Aufbau verbunden sind. Die Unterlagen bestehen beispielsweise aus einem hitzebeständigen Kunststoff. Die Bezugszeichen 20...22 beziehen sich auf Induktionsspulen, welche beispielsweise in den Unterlagen 10...12 enthalten sind. Wie in Figur 1 gezeichnet, sind die Induktionsspulen 20...22 beispielsweise elektrisch seriell verschaltet. Die Bezugszeichen 30...32 beziehen sich auf mit einer leitfähigen Schicht versehenen Geschirrelementen zur Aufnahme von Speisen. Der kastenförmige Aufbau aus Figur 1 sieht die maximale Aufnahme von drei Geschirrelementen vor, wobei in Figur 1 nur ein Geschirrelement auf einer Unterlage 12 angeordnet ist. Die Erfindung bezieht sich jedoch auf irgendeine Anzahl Unterlagen, Induktionsspulen oder Geschirrelemente. Ein kastenförmiger Aufbau kann so beispielsweise zwanzig oder vierzig Unterlagen für die maximale Aufnahme von zwanzig oder vierzig Geschirrelementen umfassen. Bei einer grösseren Anzahl Unterlagen und somit einer grösseren Anzahl Induktionsspulen kann es vorteilhaft sein, Teile der Induktionsspulen elektrisch seriell zu verschalten und die elektrisch seriell verschalteten Induktionsspulen elektrisch parallel zu verschalten.

In Figur 1 bezieht sich das Bezugszeichen 4 auf einen Generator. Mittels des Generators 4 ist ein Wechselstrom mit einer bestimmbaren Frequenz oder mit einem bestimmbaren Frequenzspektrum erzeugbar und in die elektrisch verschalteten Induktionsspulen des kastenförmigen Aufbaus einleitbar. Das Bezugszeichen 1 bezieht sich auf ein Messmodul zur Messung der Stromstärke des in die Induktionsspulen eingeleiteten Stroms. Das Bezugszeichen 2 bezieht sich auf ein Rechenmodul zur Berechnung einer Einschaltdauer. Das Bezugszeichen 3 bezieht sich auf ein Schaltmodul zum ein- und ausschalten des in die Induktionsspulen eingeleiteten Stroms.

Das Schaltmodul 3 ist beispielsweise so konfiguriert, dass während Intervallen von beispielsweise 10 Sekunden der in die Induktionsspulen eingeleitete Strom währen beispielsweise 7 Sekunden eingeschaltet wird und anschliessend während 3 Sekunden ausgeschaltet wird. Die hier genannten Zeiten sind nur als Beispiel zur Darstellung der Erfindung genannt und haben keine einschränkende Bedeutung. Die 10 Sekunden Intervalle werden beispielsweise während 10 Minuten wiederholt, womit durch eine elektromagnetische Wirkung zwischen den Induktionsspulen und der metallisch beschichteten Geschirrelementen Energie übertragen wird und eine Erwärmung, bis auf eine bestimmbare Temperatur, der Geschirrelemente und der darin angeordneten Speisen erfolgt. Die Wiederholung der Intervalle, beispielsweise während 10 Minuten, sowie die Einschaltdauer innerhalb eines Intervalls, beispielsweise 7 Sekunden, ist dabei so ausgelegt, dass bei einer maximal gefüllter kastenförmiger Anordnung, also beispielsweise bei der Anordnung von zwanzig Geschirrelementen in einer kastenförmigen Anordnung mit zwanzig Unterlagen, die Speisen gerade auf die gewünschte Temperatur erwärmt werden. Sobald jedoch die kastenförmige Anordnung nur teilweise gefüllt ist, also beispielsweise sobald in einer kastenförmigen Anordnung mit zwanzig Unterlagen nur fünf Geschirrelemente angeordnet sind, werden die Speisen durch das veränderte elektromagnetische Verhalten auf eine zu hohe Temperatur erwärmt.

In Figur 1 bezieht sich das Bezugszeichen 1 auf ein Messmodul zur Messung der Stromstärke des in die Induktionsspulen eingeleiteten Stroms. Das Bezugszeichen 2 bezieht sich auf ein Rechenmodul zur Berechnung einer Einschaltdauer. Das Rechenmodul 2 ist sowohl mit dem Messmodul 1 als auch mit dem Schaltmodul 3 verbunden. Das Rechenmodul 2, das Schaltmodul 3 und das Messmodul 1 können beispielsweise teilweise oder ganz in einem Elektronikmodul mit geeigneten elektronischen Bauelementen zusammengefasst sein. Das Rechenmodul 2 umfasst Mittel zur Erfassung der durch das Messmodul 2 gemessenen Stromstärke, Mittel zur Berechnung einer auf der Stromstärke basierten Einschaltdauer sowie Mittel zur Einstellung der berechneten Einschaltdauer im Schaltmodul 3. Eine bestimmbare Belegung der Unterlagen des kastenförmigen Aufbaus mit Geschirrelementen führt zu einer bestimmbaren Stromstärke des den Induktionsspulen zugeführten Stroms. Für eine erste Belegung mit beispielsweise wenigen Geschirrelementen resultiert eine erste Stromstärke und für eine zweite Belegung mit beispielsweise vielen Geschirrelementen resultiert eine zweite Stromstärke. Dementsprechend können beispielsweise in einer Tabelle des Rechenmoduls für bestimmbare Stromstärken eine zugeordnete Einschaltdauer abgespeichert werden. Sobald das Rechenmodul 2 mittels des Messmoduls 1 bei der Zuleitung eines Stroms zu den Induktionsspulen die momentane Stromstärke erfasst, kann mittels der Tabelle eine entsprechende Einschaltdauer zugeordnet werden und auf dem Schaltmodul 3 eingestellt werden. Eine solche Berechnung einer Einschaltdauer, oder entsprechend eines Leistungskorrekturfaktors mit welchem statt der Einschaltdauer die Leistungszuführung des Generators gesteuert wird, kann insbesondere beim Einschalten der Vorrichtung zur Erwärmung von Speisen erfolgen. Das Rechenmodul ist also beispielsweise nur während einem bestimmbaren Zeitintervall nach dem Einschalten der Vorrichtung zur Erwärmung von Speisen aktiv.

In einer bevorzugten Ausführungsvariante werden bei den Anordnungen einer maximalen Anzahl Geschirrelemente, einer mittleren Anzahl Geschirrelemente und einer minimalen Anzahl Geschirrelemente je die Stromstärke und die Endtemperatur gemessen und daraus Stützwerte berechnet. Aus der gemessenen Stromstärke wird mittels stückweise linearer Interpolation der erforderliche Korrekturfaktor der Einschaltdauer bestimmt.

Es sei an dieser Stelle erwähnt, dass mittels des Schaltmoduls oder Steuermoduls selbstverständlich mehrere Generatoren geschaltet oder gesteuert werden können. So kann sich die Messung mit einem Messmodul auf die Messung zur Erwärmung einer Vorspeise beziehen, welche durch das Rechenmodul ausgewertet wird. Durch das Schaltmodul oder das Steuermodul kann jedoch gleichzeitig, unter der Annahme, dass diese Speisen gleichförmig angeordnet sind, ein Generator zur Erwärmung einer Vorspeise und ein Generator zur Erwärmung einer Hauptspeise erwärmt werden. Selbstverständlich kann aber für jeden der verwendeten Generatoren ein separates Messmodul vorgesehen sein, welche Messwerte dieser Messmodule durch ein einzelnes Rechenmodul ausgewertet werden.

## Patentansprüche

1. Vorrichtung zum induktiven Erwärmen von mehreren mit einer leitfähigen Schicht versehenen Geschirrelementen (30..32) zur Aufnahme von Speisen, welche Geschirrelemente (30..32) auf Unterlagen (10..12) in einem kastenförmigen Aufbau (100) angeordnet sind und eine Unterlage (10..12) mindestens eine Induktionsspule (20..22) aufweist, wobei mittels mindestens eines Generators (4) ein Strom in die Induktionsspulen (20..22) der Unterlagen (10..12) zuführbar ist und der in die Induktionsspulen (20..22) zuführbare Strom ein- und ausschaltbar oder kontinuierlich regelbar ist, **dadurch gekennzeichnet,**

   **dass** Kalibrierwerte, welche einen zuführbaren Strom einer Temperatur der Speisen zuordnen, in einem Rechenmodul (2) abgespeichert werden,
   **dass** mittels eines Messmoduls (1) die Stromstärke des in die Induktionsspulen (20..22) zuführbaren Stroms messbar ist,
   **dass** mittels des Rechenmoduls (2) basierend auf den abgespeicherten Kalibrierwerten sowie basierend auf der gemessenen Stromstärke des in die Induktionsspulen (20..22) zuführbaren Stroms eine Einschaltdauer oder ein Leistungskorrekturfaktor bestimmbar ist, und
   **dass** mittels eines Schaltmoduls oder Steuermoduls (3) der mittlere in die Induktionsspulen (20..22) zuführbare Strom entsprechend der mittels des Rechenmoduls bestimmten Einschaltdauer einschaltbar oder entsprechend des bestimmten Leistungskorrekturfaktors einstellbar ist.

2. Vorrichtung nach Anspruch 1, **dadurch gekenn-**

**zeichnet, dass** die Induktionsspulen (20..22) elektrisch seriell und/oder elektrisch parallel verschaltet sind.

3. Vorrichtung nach einem der Ansprüche 1 bis 2, **dadurch gekennzeichnet, dass** der in die Induktionsspulen (20..22) zuführbare Strom während einer Einschaltdauer einschaltbar ist und danach während einer Ausschaltdauer ausschaltbar ist, wobei das Einschalten und anschliessende Ausschalten des Stroms ein Intervall bildet, und wobei die Geschirrelemente (30..32) mittels der Durchführung einer bestimmbaren Anzahl von Intervallen erwärmbar sind.

4. Vorrichtung nach Anspruch 3, **dadurch gekennzeichnet, dass** die Einschaltdauer eines Intervalls mittels eines Reduktionsfaktors, welcher von der gemessenen Stromstärke des in die Induktionsspulen (20..22) zuführbaren Stroms abhängig ist, reduzierbar ist.

5. Vorrichtung nach Anspruch 4, **dadurch gekennzeichnet, dass** bei der Anordnung einer maximalen Anzahl Geschirrelemente max eine maximale Stromstärke $I_{max}$ in die Induktionsspulen zuführbar ist, wobei eine Endtemperatur $T_{max}$ resultiert, dass bei der Anordnung einer mittleren Anzahl Geschirrelemente $x$ eine mittlere Stromstärke $I_x$ in die Induktionsspulen zuführbar ist, wobei eine Endtemperatur $T_x$ resultiert, dass bei der Anordnung einer minimalen Anzahl Geschirrelemente *min* eine minimale Stromstärke $I_{min}$ in die Induktionsspulen (20..22) zuführbar ist, wobei eine Endtemperatur $T_{min}$ resultiert, und dass daraus der Reduktionsfaktor $k$ zur Reduktion der Einschaltdauer eines Intervalls mittels einer linearen Interpolation aus folgenden Stützpunkten und den Steigungen $m_1$ und $m_2$ bestimmbar ist:

$$k_{min} = \frac{(T_{max} - T_U)}{(T_{min} - T_U)}$$

$$k_x = \frac{(T_{m,ex} - T_U)}{(T_x - T_U)}$$

$$k_{max} = 1$$

$$m_2 = \frac{(k_{max} - k_x)}{(I_{max} - I_x)}$$

$$m_1 = \frac{(k_x - k_{min})}{(I_x - I_{min})}$$

$$k_1 = k_{min} - m_1(I_{min} - I)$$

$$k_2 = 1 - m_2(I_{max} - I)$$

$$k = Min\{k_1, k_2\} \quad wenn \quad m_1 > m_2$$

$$k = Max\{k_1, k_2\} \quad wenn \quad m_1 < m_2$$

**6.** Verfahren zum induktiven Erwärmen von mehreren mit einer leitfähigen Schicht versehenen Geschirrelementen zur Aufnahme von Speisen, welche Geschirrelemente auf Unterlagen in einem kastenförmigen Aufbau angeordnet sind und eine Unterlage mindestens eine Induktionsspule aufweist, wobei mittels mindestens eines Generators ein Strom in die Induktionsspulen der Unterlagen zugeführt wird und der in die Induktionsspulen zugeführte Strom ein- und ausgeschaltet wird, **dadurch gekennzeichnet,**

dass die Stromstärke des in die Induktionsspulen zugeführten Stroms gemessen wird,
**dass** basierend auf der gemessenen Stromstärke des in die Induktionsspulen zugeführten Stroms eine Einschaltdauer bestimmt wird, und
**dass** der in die Induktionsspulen zugeführte Strom während der Einschaltdauer eingeschaltet wird.

**7.** Verfahren nach Anspruch 6, **dadurch gekennzeichnet, dass** der in die Induktionsspulen zugeführte Strom während einer Einschaltdauer eingeschaltet wird und danach während einer Ausschaltdauer ausgeschaltet wird, wobei das Einschalten und anschliessende Ausschalten des Stroms ein Intervall bildet, und wobei die Geschirrelemente mittels der Durchführung einer bestimmbaren Anzahl von Intervallen erwärmt werden.

**8.** Verfahren nach Anspruch 7, **dadurch gekennzeichnet, dass** die Einschaltdauer eines Intervalls mittels eines Reduktionsfaktors, welcher von der gemessenen Stromstärke des in die Induktionsspulen zugeführten Stroms abhängig ist, reduziert wird.

**9.** Verfahren nach Anspruch 8, **dadurch gekennzeichnet, dass** bei der Anordnung einer maximalen Anzahl Geschirrelemente max eine maximale Stromstärke $I_{max}$ in die Induktionsspulen zugeführt wird und eine Endtemperatur $T_{max}$ resultiert, dass bei der Anordnung einer mittleren Anzahl Geschirrelemente x eine mittlere Stromstärke $I_x$ in die Induktionsspulen zugeführt wird und eine Endtemperatur $T_x$ resultiert, dass bei der Anordnung einer minimalen Anzahl Geschirrelemente min eine minimale Stromstärke $I_{min}$ in die Induktionsspulen zugeführt wird und eine Endtemperatur $T_{min}$ resultiert, und dass daraus der Reduktionsfaktor $k$ zur Reduktion der Einschaltdauer eines Intervalls mittels einer linearen Interpolation aus folgenden Stützpunkten und den Steigungen $m_1$ und $m_2$ bestimmt wird:

$$k_{min} = \frac{(T_{max} - T_U)}{(T_{min} - T_U)}$$

$$k_x = \frac{(T_{m,ax} - T_U)}{(T_x - T_U)}$$

$$k_{max} = 1$$

$$m_2 = \frac{(k_{max} - k_x)}{(I_{max} - I_x)}$$

$$m_1 = \frac{(k_x - k_{min})}{(I_x - I_{min})}$$

$$k_1 = k_{min} - m_1(I_{min} - I)$$

$$k_2 = 1 - m_2(I_{max} - I)$$

$$k = Min\{k_1, k_2\} \quad wenn \quad m_1 > m_2$$

$$k = Max\{k_1, k_2\} \quad wenn \quad m_1 < m_2$$

**Claims**

**1.** Device for inductive heating of several tableware elements provided with a conductive layer (30..32) for receiving food, which tableware elements (30..32) are disposed on supports (10..12) in a box-shaped structure (100), and one support (10..12) has at least one induction coil (20..22), a current being suppliable into the induction coils (20..22) of the support (10.. 12) by means of at least one generator (4) and the current suppliable into the induction coils (20..22) being able to be switched on and off or be continuously adjustable, **characterised in that** calibration values, which assign a suppliable current to the temperature of the food, are stored in a computer module (2),
**in that** the current intensity of the current suppliable into the induction coils (20..22) is measurable by means of a measuring module (1),
**in that** a power-on duration or a power correction factor is definable by means of the computer module (2), based on the stored calibration values as well as based on the measured current intensity of the current suppliable into the induction coils (20..22), and
**in that**, by means of a switching module or a control module (3), the average current suppliable into the induction coils (20..22) is able to be switched on in accordance with the power-on duration, determined by means of the computer module, or is able to be adjusted in accordance with the defined power correction factor.

2. Device according to claim 1, **characterised in that** the induction coils (20..22) are connected electrically in series and/or electrically parallel.

3. Device according to one of the claims 1 to 2, **characterised in that** the current suppliable into the induction coils (20..22) is able to be switched on for a power-on duration, and afterwards is able to be switched off for a power-off duration, the switching on and subsequent switching off of the current forms an interval, and the tableware elements (30..32) being heatable by means of the implementation of a definable number of intervals.

4. Device according to claim 3, **characterised in that** the power-on duration of an interval is reducible by means of a reduction factor, which depends on the measured current intensity of the current suppliable into the induction coils (20..22).

5. Device according to claim 4, **characterised in that**, with the placement of a maximal number of tableware elements max, a maximal current intensity $I_{max}$ is suppliable into the induction coils, a final temperature $T_{max}$ resulting, **in that** with the placement of an average number of tableware elements $x$, an average current intensity $I_x$ is suppliable into the induction coils, a final temperature $T_x$ resulting, **in that** with the placement of a minimal number of tableware elements $min$, a minimal current intensity $I_{min}$ is suppliable into the induction coils (20..22), a final temperature $T_{min}$ resulting, and **in that** out of this a reduction factor $k$ is able to be determined for reduction of the power-on duration of an interval by means of a linear interpolation from the following interpolation points and the gradients $m_1$ and $m_2$:

$$k_{min} = \frac{(T_{max} - T_U)}{(T_{min} - T_U)}$$

$$k_x = \frac{(T_{m,ax} - T_U)}{(T_x - T_U)}$$

$$k_{max} = 1$$

$$m_2 = \frac{(k_{max} - k_x)}{(I_{max} - I_x)}$$

$$m_1 = \frac{(k_x - k_{min})}{(I_x - I_{min})}$$

$$k_1 = k_{min} - m_1(I_{min} - I)$$

$$k_2 = 1 - m_2(I_{max} - I)$$

$$k = Min\{k_1, k_2\} \; if \; m_1 > m_2$$

$$k = Max\{k_1, k_2\} \; if \; m_1 < m_2$$

6. Method for inductive heating of several tableware elements provided with a conductive layer for receiving food, which tableware elements are disposed on supports in a box-shaped structure, and one support has at least one induction coil, a current being supplied into the induction coils of the support by means of at least one generator, and the current being supplied into the induction coils being switched on and off, **characterised,**
**in that** the current intensity of the current supplied into the induction coils is measured,
**in that** a power-on duration is determined based on the measured current intensity of the current supplied into the induction coils, and **in that** the current supplied into the induction coils is switched on during the power-on period.

7. Method according to claim 6, **characterised in that** the current supplied into the induction coils is switched on for a power-on duration, and afterwards is switched off for a power-off duration, the switching on and subsequent switching off of the current forming an interval, and the tableware elements being heated by means of the implementation of a definable number of intervals.

8. Method according to claim 7, **characterised in that** the power-on duration of an interval is reduced by means of a reduction factor, which depends upon the measured current intensity of the current supplied into the induction coils.

9. Method according to claim 8, **characterised in that**, with the placement of a maximal number of tableware elements max, a maximal current intensity $I_{max}$ is supplied into the induction coils and a final temperature $T_{max}$ results, **in that** with the placement of an average number of tableware elements $x$ an average current intensity $I_x$ is supplied into the induction coils and a final temperature $T_x$ results, **in that** with the placement of a minimal number of tableware elements min a minimal current intensity $I_{min}$ is supplied into the induction coils and a final temperature $T_{min}$ results, and **in that** out of this a reduction factor $k$ is determined for reduction of the power-on duration of an interval by means of a linear interpolation from the following interpolation points and the gradients $m_1$ and $m_2$:

$$k_{min} = \frac{\left(T_{max} - T_U\right)}{\left(T_{min} - T_U\right)}$$

$$k_x = \frac{\left(T_{m,ax} - T_U\right)}{\left(T_x - T_U\right)}$$

$$k_{max} = 1$$

$$m_2 = \frac{\left(k_{max} - k_x\right)}{\left(I_{max} - I_x\right)}$$

$$m_1 = \frac{\left(k_x - k_{min}\right)}{\left(I_x - I_{min}\right)}$$

$$k_1 = k_{min} - m_1\left(I_{min} - I\right)$$

$$k_2 = 1 - m_2\left(I_{max} - I\right)$$

$$k = Min\{k_1, k_2\} \text{ if } m_1 > m_2$$

$$k = Max\{k_1, k_2\} \text{ if } m_1 < m_2$$

**Revendications**

1. Dispositif pour le chauffage inductif de plusieurs éléments de vaisselle (30..32) munis d'une couche conductrice pour la réception de repas, les éléments de vaisselle (30..32) qui sont disposés sur des supports (10..12) en forme de caisson (100) et un support (10..12) présentant au moins une bobine à induction (20..22), au moyen d'au moins un générateur (4) un courant pouvant être amené dans les bobines à induction (20...22) des supports (10..12) et le courant amené dans les bobines à induction (20..22) pouvant être mis sous tension ou hors tension ou être réglable en continu, **caractérisé en ce que**

des valeurs de calibrage, qui associent un courant amené à une température des repas, sont stockées dans un module de calcul (2), **en ce qu'**au moyen d'un module de mesure (1), l'intensité de courant du courant conductible dans les bobines à induction (20..22) peut être mesuré, **en ce qu'**au moyen du module de calcul (2), en se basant sur les valeurs de calibrage mémorisées ainsi qu'en se basant sur l'intensité de courant mesurée du courant conductible dans les bobines à induction (20..22), une durée de mise sous tension ou un facteur de correction de puissance est déterminable et **en ce qu'**au moyen d'un module de commutation ou de commande (3), le courant moyen conductible dans les bobines à induction (20..22) est déclenchable en fonction de la durée de mise sous tension définie au moyen du module de calcul ou est réglable en fonction du facteur défini de correction de puissance.

2. Dispositif selon la revendication 1, **caractérisé en ce que** les bobines à induction (20..22) peuvent être montées électriquement en série ou en parallèle.

3. Dispositif selon l'une des revendications 1 à 2, **caractérisé en ce que** le courant conductible dans les bobines à induction (20..22) est connectable pendant une durée de mise sous tension et peut être ensuite mis hors tension pendant une durée de coupure, la mise en tension et hors tension consécutive du courant formant un intervalle et les éléments de vaisselle (30..32) pouvant être chauffés par l'exécution d'un nombre déterminable d'intervalles.

4. Dispositif selon la revendication 3, **caractérisé en ce que** la durée de mise sous tension d'un intervalle peut être réduite au moyen d'un facteur de réduction qui dépend de l'intensité de courant mesurée du courant conductible dans les bobines à induction (20.. 22).

5. Dispositif selon la revendication 4, **caractérisé en ce que** dans la disposition d'un nombre maximal d'éléments de vaisselle $_{max}$, une intensité maximale de courant $I_{max}$ peut être conduite dans les bobines à induction, une température finale $T_{max}$ en résultant, **en ce que** dans la disposition d'un nombre moyen des éléments de vaisselle x, une intensité de courant moyenne $I_x$ peut être amenée dans les bobines à induction, une température finale $T_x$ en résultant, **en ce que** dans la disposition d'un nombre minimal d'éléments de vaisselle min, une intensité minimale de courant $I_{min}$ peut être conduite dans les bobines à induction (20..22), une température finale $T_{min}$ en résultant, et **en ce qu'**à partir de là, le facteur de réduction k peut être déterminé pour la réduction de la durée de mise sous tension d'un intervalle au moyen d'une interpolation linéaire à partir des points de support suivants et des élévations $m_1$ et $m_2$:

$$k_{\min} = \frac{(T_{\max} - T_u)}{(T_{\min} - T_u)}$$

$$k_x = \frac{(T_{\max} - T_u)}{(T_x - T_u)}$$

$$K_{\text{max}} = 1$$

$$m_2 = \frac{(k_{\max} - k_x)}{(I_{\max} - I_x)}$$

$$m1 = \frac{(k_x - K\min)}{(I_x - I_{\min})}$$

$$k_1 = k_{\min} - m_1(I_{\min} - I9$$

$$k_2 = 1 - m_2(I_{\max} - I)$$

$$k = \text{Min}\{k_1, k_2\} \text{ si } m_1 > m_2$$

$$k = \text{Max}\{k_1, k_2\} \text{ si } m_1 < m_2$$

6. Procédé pour le chauffage inductif de plusieurs éléments de vaisselle munis d'une couche conductible pour recevoir des repas, éléments de vaisselle qui sont disposés sur des supports dans une construction en forme de caisson et un support présentant au moins une bobine à induction, au moyen d'au moins un générateur un courant pouvant être amené dans les bobines à induction des supports et le courant amené dans les bobines à induction étant mis sous et hors tension **caractérisé**

   **en ce que** l'intensité du courant amenée dans les bobines à induction est mesurée,
   **en ce qu'**en se basant sur l'intensité de courant mesurée du courant amené dans les bobines à induction, une durée de mise sous tension est définie et
   **en ce que** le courant amené dans les bobines à induction est mis sous tension pendant la durée de mise sous tension.

7. Procédé selon la revendication 6, **caractérisé en ce que** le courant amené dans les bobines à induction est mis sous tension pendant une durée de mise sous tension et est mis hors tension pendant une durée de mise hors tension, la mise sous tension et la mise hors tension consécutive du courant formant un intervalle et les éléments de vaisselle étant chauffés au moyen de l'exécution d'un nombre prédéterminable d'intervalles.

8. Procédé selon la revendication 7, **caractérisé en ce que** la durée de mise sous tension d'un intervalle peut être réduite au moyen d'un facteur de réduction qui dépend de l'intensité de courant mesurée du courant amené dans les bobines à induction.

9. Procédé selon la revendication 8, **caractérisé en ce que** dans la disposition d'un nombre maximal d'éléments de vaisselle $_{max}$, une intensité maximale de courant $I_{max}$ peut être conduite dans les bobines à induction, une température finale $T_{max}$ en résultant, **en ce que** dans la disposition d'un nombre moyen des éléments de vaisselle x, une intensité de courant moyenne $I_x$ peut être amenée dans les bobines à induction, une température finale $T_x$ en résultant, **en ce que** dans la disposition d'un nombre minimal d'éléments de vaisselle min une intensité minimale de courant $I_{min}$ peut être amenée dans les bobines à induction, une température finale $T_{min}$ en résultant, et **en ce qu'**à partir de là, le facteur de réduction k peut être déterminé pour la réduction de la durée de mise sous tension d'un intervalle au moyen d'une interpolation lineaire à partir des points de support suivants et des élévations $m_1$ et $m_2$:

$$k_{min} = \frac{(T_{max} - T_u)}{(T_{min} - T_u)}$$

$$k_x = \frac{(T_{max} - T_u)}{(T_x - T_u)}$$

$$K_{max} = 1$$

$$m_2 = \frac{(k_{max} - k_x)}{(I_{max} - I_x)}$$

$$m1 = \frac{(k_x - K\min)}{(I_x - I_{min})}$$

$$k_1 = k_{min} - m_1(I_{min} - I9$$

$$k_2 = 1 - m_2(I_{max} - I)$$

$$k = \text{Min}\{k_1, k_2\} \text{ si } m_1 > m_2$$

$$k = \text{Max}\{k_1, k_2\} \text{ si } m_1 < m_2$$

FIG. 1